# EUROPEAN PATENT APPLICATION

(11) **EP 1 376 426 A1**
(43) Date of publication of application: **02.01.2004**
(21) Application number: 02708662.8
(22) Date of filing: 26.03.2002
(51) Int. Cl.: G06F 17/60, H04M 15/00, H04M 11/00

(54) **METHOD, SYSTEM AND PROGRAM FOR PROVIDING SERVICE REQUIRING SETTLEMENT THROUGH COMMUNICATION LINE**

(30) Priority: 29.03.2001 JP 2001096510
(71) Applicant: MATSUSHITA ELECTRIC INDUSTRIAL CO., LTD., Kadoma-shi, Osaka 571-8501 (JP)
(72) Inventor: ODACHI, Eriko, Yokohama-shi, Kanagawa 224-0056 (JP); ABE, Tomoaki, Yokohama-shi, Kanagawa 222-0011 (JP)
(74) Representative: Pautex Schneider, Nicole
(86) International application number: PCT/JP2002/002895
(87) International publication number: WO 2002/080066

(57) **Abstract**

The present invention relates to a method of, a system for, and a computer program product for providing a service via a communication line, and more particularly to a method of, a system for, and a computer program product for providing a service via a communication line accompanied by a settlement. Upon providing a service via a communication line for a communication unit (20) on the side of a service user, the computer (30) of the settlement institute is requested by the computer (10) of the service provider to charge a line connection fee to the settlement account of the service user, the computer of the settlement institute is operative to judge whether or not it is possible to charge a predetermined amount of the communication connection fee to the settlement account of the service user, charge a minimum amount of the communication connection fee to the settlement account of the service user as a charging process if it is judged that it is possible, and transmit a report indicative of a result of the charging process to the computer of the service provider, and the computer of the service provider is operative to determine whether or not the service is permitted in accordance with the report indicative of the result of the charging process.

## Description

### Field of the Invention

The present invention relates to a method of, a system for, and a computer program product for providing a service via a communication line, and more particularly to a method of, a system for, and a computer program product for providing a service via a communication line accompanied by a settlement.

### Background of the Invention

In a system, in which a service provider provides a service for a service user located, for example, remotely apart from the service provider, either the service provider or the service user is required to assume a default risk depending upon whether the service provider provides a service before receiving a service fee in respect of the service from the service user or the service user pays a service fee before receiving a service in return for the service fee from the service provider.

This means that the service provider assumes a risk of failing to collect a service fee in respect of a service if the service provider provides the service for the service user before receiving the service fee while, on the other hand, the service user assumes a risk of failing to receive a service appropriate to a service fee if the service user pays the service fee before receiving the service.

The same holds true for a service provider providing and a service user receiving a service via a communication line such as, for example, a telephone communication line, a network communication line, and the like. The service provider providing such service, in general, is a large corporate organization rendering the service provider highly reliable, and the service user, accordingly, assumes a low risk of failing to receive the service after paying the service fee. This leads to the fact that the service user in such a system typically pays a certain amount of money in advance in a manner such as, for example, a debit card payment, and later receives the service provided via the communication line, in return for the money paid in advance.

Recently, the service providers tend to provide their services for service users before receiving service fees in respect of the services from the service users so as to increase the number of their service users and stand out from the competition. The service providers that provide their services for service users before receiving service fees in respect of the services from the service users have insurance covering against risks because of the fact that the service providers assume the risks of failing to collect the service fees in respect of the services already provided, from the service user.

This results in the fact that those service providers are required to pay, for example, 20% of the service fee in respect of the service to an insurance company as an insurance fee, and the insurance company takes over 80% of a service fee if a service user fails to pay the service fee in respect of the service, in return for the insurance fee.

The service providers that pay the insurance fee, however, encounter a drawback that the insurance fee may impose an economic burden on the service providers.

It is therefore an object of the present invention to provide a method of, a system for, and a compute program product for providing a service via a communication line accompanied by a settlement, which can eliminate a risk of failing to collect a service fee in respect of the service from a service user, as well as eliminate the need of the conventional insurance fee, which has been paid for the insurance to protect the service providers against the risks, thereby reducing the service fee in respect of the service.

### Summary of the Invention

In order to attain the aforementioned object, in accordance with a first aspect of the present invention, there is provided a service providing method of providing a service via a communication line for a communication unit on the side of a service user accompanied by a settlement, the service user having a settlement account at a settlement institute, the service being provided by a service provider, the settlement institute and the service provider respectively having computers, the computer of the settlement institute being operative to settle a fee in respect of the service with the settlement account, the service providing method comprising the steps of: a1) requesting the computer of the settlement institute to charge a line connection fee to the settlement account of the service user, by the computer of the service provider; b1) judging whether or not it is possible to charge a predetermined amount of the communication connection fee to the settlement account of the service user, charging a minimum amount of the communication connection fee to the settlement account of the service user as a charging process if it is judged that it is possible, and transmitting a report indicative of a result of the charging process to the computer of the service provider, by the computer of the settlement institute; and c1) determining whether or not the service is permitted in accordance with the report indicative of the result of the charging process, by the computer of the service provider.

In the aforementioned method, it is judged by the computer of the settlement institute whether or not the balance on the settlement account of the service user is greater than the amount of money charged when the computer of the service provider requests the computer of the settlement institute to charge a communication connection fee. Only when it is judged that the balance on the settlement account of the service user is greater than the amount of money charged, the charging process is performed in such a manner that a predetermined amount of the communication connection fee is charged to the settlement account of the service user and the report indicative of the result of the charging process is transmitted to the computer of the service provider. The computer of the service provider can determine whether or not the service is permitted in accordance with the report indicative of the result of the charging process, thereby enabling to minimize the risk of failing to collect the communication fee, eliminate the need of the conventional insurance fee, and accordingly reduce the service fee in respect of the service.

In accordance with a second aspect of the present invention, there is provided a service providing method of providing a service via a communication line for a communication unit on the side of a user accompanied by a settlement, the user having a settlement account at a settlement institute, the service being provided by a service provider, the settlement institute and the service provider respectively having computers, the computer of the settlement institute being operative to settle a fee in respect of the service with the settlement account, the service providing method comprising the steps of: a2) charging a predetermined initial amount of fee to the settlement account of the user before the service is provided for the communication unit on the side of a user; b2) requesting the computer of the settlement institute to charge an additional amount of fee in respect of a service to be continued to the settlement account of the user if an amount of fee required for an amount of service accumulatively provided is greater than an amount of fee already paid, by the computer of the service provider; c2) judging whether or not it is possible to charge the additional amount of fee to the settlement account of the user, charging the additional amount of fee to the settlement account of the user as a charging process if it is judged that it is possible, and transmitting a report indicative of a result of the charging process to the computer of the service provider, by the computer of the settlement institute; and d2) determining whether or not the service is to be continued in accordance with the report indicative of the result of the charging process, by the computer of the service provider.

In the aforementioned method, the computer of the settlement institute is requested by the computer of the service provider to charge an additional amount of fee in respect of a service to be continued to the settlement account of the user if an amount of fee required for an amount of service, such as for example a utilization time period or an amount of provided information, accumulatively provided is greater than an amount of fee already paid, and it is then judged by the computer of the settlement institute whether or not the balance on the settlement account of the service user is greater than the amount of money charged. Only when it is judged that the balance on the settlement account of the service user is greater than the amount of money charged, the charging process is performed in such a manner that the additional amount of fee is charged to the settlement account of the user. The report indicative of the result of the charging process is transmitted to the computer of the service provider and the computer of the service provider is operative to determine whether or not the service is to be continued in accordance with the report indicative of the result of the charging process. This leads to the fact that the service provider can prevent the risk of failing to collect the communication fee in respect to the continued service, thereby eliminating the need of the conventional insurance fee, and accordingly reducing the service fee in respect of the service.

In accordance with a third aspect of the present invention, there is provided a service providing method of providing a service via a communication line for a communication unit on the side of a user accompanied by a settlement, the user having a settlement account at a settlement institute, the service being provided by a service provider, the settlement institute and the service provider respectively having computers, the computer of the settlement institute being operative to settle a fee in respect of the service with the settlement account, the service providing method comprising the steps of: a3) requesting the computer of the settlement institute to check an available balance on the settlement account of the user, by the computer of the service provider; b3) transmitting a report indicative of the balance on the settlement account of the user to the computer of the service provider, by the computer of the settlement institute; and c3) judging whether or not the balance on the settlement account of the user is greater than a predetermined communication connection fee, determining whether or not the service is permitted in accordance with a result of the judgment, and requesting the computer of the settlement institute to charge the communication connection fee to the settlement account of the user after the service starts to be provided if it is judged that the balance on the settlement account of the user is greater than the communication connection fee, by the computer of the service provider.

In the aforementioned method, the report indicative of the balance on the settlement account of the user is transmitted to the computer of the service provider, by the computer of the settlement institute on request of the computer of the service provider, and it is determined by the computer of the service provider whether or not the service is permitted in accordance with a result of the judgment as a result of the judgment made whether or not the balance on the settlement account of the user is greater than a predetermined communication connection fee. The computer of the service provider is operative to request the computer of the settlement institute to charge the communication connection fee to the settlement account of the user after the service starts to be provided if it is judged that the balance on the settlement account of the user is greater than the communication connection fee. This constitution makes it possible for the service provider to promptly provide a service and eliminate a risk of failing to collect a service fee in respect of the service from the service user while reducing a time required for communication between the computer of the service provider and the computer of the settlement institute.

The aforementioned method may further comprise the steps of: d) charging the computer of the settlement institute for the communication connection fee after the service starts to be provided, by the computer of the service provider; and e) charging the communication connection fee charged by the computer of the service provider to the settlement account of the user, by the computer of the settlement institute. This constitution makes it possible for the service provider to promptly provide a service.

Also, the aforementioned method may further comprise the steps of: f) detecting a change in the balance on the settlement account of the user, and transmitting a report indicative of a current balance on the settlement account of the user if any change is detected, by the computer of the settlement institute; and g) comparing the current balance on the settlement account of the user with a communication connection fee to be charged, and determining whether or not the service is to be continued in accordance with a result of the comparison, by the computer of the service provider. This constitution makes it possible for the computer of the service provider to check the balance on the settlement account of the service user while communication is being continued, thereby ensuring to collect the service fee.

Also, the aforementioned method may further comprise the step of: h) restricting withdrawals from the settlement account of the user except for the payment of the fee in respect of the service during a period starting from a start time when the service starts to be provided until the service is terminated and the fee in respect of the service so far provided is settled, by the computer of the settlement institute. This constitution makes it possible for the computer of the settlement institute to restrict withdrawals from the settlement account of the user except for the payment of the fee in respect of the service during a period starting from a start time when the service starts to be provided until the service is terminated and the fee in respect of the service so far provided is settled, thereby ensuring to collect the service fee.

Also, the aforementioned method may further comprise the steps of: i) transmitting a balance change request to the computer of service provider if any input which is to result in a withdrawal from the settlement account of the user is detected after the service starts to be provided, by the computer of the settlement institute; j) calculating a changed balance on the settlement account of the user to be caused by the withdrawal, judging whether or not the changed balance on the settlement account of the user is greater than the communication connection fee to be charged, and responding to the balance change request and determining whether the service is to be continued or terminated in accordance with a result of the judgment, by the computer of the service provider. This constitution makes it possible for the computer of the service provider to restrict withdrawals from the settlement account of the user except for the payment of the fee in respect of the service during a period starting from a start time when the service starts to be provided until the service is terminated and the fee in respect of the service so far provided is settled, thereby ensuring to collect the service fee.

Also, the aforementioned method may further comprise the steps of: k) charging the computer of the settlement institute for the communication connection fee to be charged before the withdrawal resulting from the input is made from the settlement account of the user if it is judged that the changed balance on the settlement account of the user is not greater than the communication connection fee to be charged in the step (j), by the computer of the service provider; and l) charging the communication connection fee to be charged to the settlement account of the user, by the computer of the settlement institute. This constitution ensures to collect the service fee.

In accordance with a fourth aspect of the present invention, there is provided a service providing system for providing a service via a communication line for a communication unit on the side of a user accompanied by a settlement, the user having a settlement account at a settlement institute, the service being provided by a service provider, the settlement institute having a computer, the computer of the settlement institute being operative to settle a fee in respect of the service with the settlement account, the service provider comprising: settlement request means for requesting the computer of the settlement institute to check an available balance on the settlement account of the user, and charge a predetermined communication connection fee to the settlement account of the user as a settlement process; report request means for requesting the computer of the settlement institute to transmit a report with respect to the settlement process; and determining means for determining whether providing the service is permitted or not on the basis of the report in response to a connection request from the communication unit.

In the aforementioned service providing system, the settlement request means is operative to request the computer of the settlement institute to check an available balance on the settlement account of the user, and charge a predetermined communication connection fee to the settlement account of the user as a settlement process, and the report request means is operative to request the computer of the settlement institute to transmit a report with respect to the settlement process. The determining means is operative to determine whether providing the service is permitted or not on the basis of the report in response to a connection request from the communication unit. This constitution makes it possible for the service provider to determine whether or not providing the service is permitted on the basis of the report, thereby enabling to eliminate the need of the conventional insurance fee, and accordingly reduce the service fee in respect of the service.

In the aforementioned service providing system, the settlement request means may be operative to request the computer of the settlement institute to check an available balance on the settlement account of the user whenever a predetermined amount of service, such as for example a utilization time period or an amount of provided information, is provided for a predetermined minimum amount of fee. This constitution ensures to collect the service fee.

In the aforementioned service providing system, the settlement institute may comprise: balance judging means for judging an available balance on the settlement account, wherein the balance judging means is operative to transmit a report indicative of a result of the judgment on the balance on the settlement account to the determining means of the service provider when the settlement request means transmits a communication connection fee bill including account identification information indicative of an account number of the settlement account of the user, and an amount of money to be paid for the communication connection fee. This constitution makes it possible for the service provider to promptly judge the available balance on the settlement account.

In the aforementioned service providing system, the settlement institute may comprise: identification information storage means for storing settlement institute identification information used to identify the settlement institute and account identification information indicative of an account number of the settlement account of the user; and report making means for making a report on the settlement process including an amount of money paid, wherein the report making means is operative to make the report on the settlement process indicating the amount of money paid being fulfilled when it is judged that the balance on the settlement account is greater than an amount of money to be paid, and the amount of money to be paid is charged to the settlement account of the user and transferred to an account of the service provider, the report making means is operative to make the report on the settlement process indicating the amount of money paid being zero when it is judged that the balance on the settlement account is less than an amount of money to be paid, and the amount of money to be paid is not transferred to the account of the service provider, and the determining means of the service provider is operative to judge whether providing the service is permitted or not depending on whether the amount of money paid indicated in the report is fulfilled or zero. This constitution makes it possible for the service provider to permit the service if the amount of money is paid and not permit the service if the amount of money is not paid while the service is being provided, thereby eliminating a risk of failing to collect a service fee in respect of the service from the service user.

In the aforementioned service providing system, the service provider may further comprise: balance check request means for requesting the settlement institute to check an available balance on the settlement account, wherein the determining means of the service provider is operative to judge whether providing the service is permitted or not on the basis of the balance on the settlement account. This constitution makes it possible for the service provider to determine whether the service is to be permitted or not without burdening the settlement institute.

In accordance with a fifth aspect of the present invention, there is provided a service providing computer program product comprising a computer usable storage medium having computer readable program code embodied therein for providing a service via a communication line accompanied by a settlement, the user having a settlement account at a settlement institute, the service being provided by a service provider, the settlement institute and the service provider respectively having computers, the computer of the settlement institute being operative to settle a fee in respect of the service with the settlement account, wherein the computer readable program code is executable to perform a set of functions implementing: settlement request means for requesting the computer of the settlement institute to check an available balance on the settlement account of the user, and charge a predetermined communication connection fee to the settlement account of the user as a settlement process: report request means for requesting the computer of the settlement institute to transmit a report with respect to the settlement process; and determining means for determining whether providing the service is permitted or not on the basis of the report in response to a connection request from the communication unit.

In the aforementioned service providing computer program product, the computer readable program code is executable to request the computer of the settlement institute to check an available balance on the settlement account of the user, and charge a predetermined communication connection fee to the settlement account of the user as a settlement process; request the computer of the settlement institute to transmit a report with respect to the settlement process; and determine whether providing the service is permitted or not on the basis of the report in response to a connection request from the communication unit. The aforementioned computer program product makes it possible for the service provider to determine whether or not providing the service is permitted on the basis of the report, thereby enabling to eliminate the need of the conventional insurance fee, and accordingly reduce the service fee in respect of the service.

### Brief Description of the Drawings

The features and advantages of a method of, a system for, and a computer program product for providing a service via a communication line accompanied by a settlement according to the present invention will more clearly be understood from the following description taken in conjunction with the accompanying drawings in which:
FIG. 1 is a block diagram showing a first preferred embodiment of the service providing system according to the present invention;
FIG. 2 is a block diagram showing storage information stored in a storage unit on the side of a service provider forming part of the first embodiment of the service providing system according to the present invention;
FIG. 3 is a block diagram showing storage information stored in a storage mean on the side of a settlement institute forming part of the first embodiment of the service providing system according to the present invention;
FIG. 4 is a block diagram showing communication connection fee information to be requested from the side of the service provider forming part of the first embodiment of the service providing system according to the present invention;
FIG. 5 is a block diagram showing fee charging report information to be generated on the side of the settlement institute forming part of the first embodiment of the service providing system according to the present invention;
FIG. 6 is a flow chart for explaining a whole operation performed in the first embodiment of the service providing system according to the present invention;
FIG. 7 is a flow chart, following the flowchart shown in FIG. 6, for explaining the whole operation performed in the first embodiment of the service providing system according to the present invention;
FIG. 8 is a block diagram showing a second preferred embodiment of the service providing system according to the present invention;
FIG. 9 is a block diagram showing request information (balance request information or telephone fee bill information) to be requested from the side of the service provider forming part of the second embodiment of the service providing system according to the present invention;
FIG. 10 is a block diagram showing subsequent information following the balance request information from the side of the service provider forming part of the second embodiment of the service providing system according to the present invention;
FIG. 11 is a block diagram showing subsequent information following the telephone fee bill information from the side of the service provider forming part of the second embodiment of the service providing system according to the present invention;
FIG. 12 is a block diagram showing report information to be generated on the side of the settlement institute forming part of the second embodiment of the service providing system according to the present invention;
FIG. 13 is a block diagram showing subsequent information following the report information to be generated on the side of the settlement institute forming part of the second embodiment of the service providing system according to the present invention;
FIG. 14 is a block diagram showing telephone fee charging report information to be generated on the side of the settlement institute forming part of the second embodiment of the service providing system according to the present invention;
FIG. 15 is a block diagram showing subsequent information following a refusal repot to be generated on the side of the settlement institute forming part of the second embodiment of the service providing system according to the present invention;
FIG. 16 is a block diagram showing storage information stored in a managing information storage mean on the side of a settlement institute forming part of the second embodiment of the service providing system according to the present invention;
FIG. 17 is a flow chart for explaining a whole operation performed in the second embodiment of the service providing system according to the present invention;
FIG. 18 is a flow chart, following the flowchart shown in FIG. 17, for explaining the whole operation performed in the second embodiment of the service providing system according to the present invention;
FIG. 19 is a flow chart for explaining an operation performed in a modification of the second embodiment of the service providing system according to the present invention; and
FIG. 20 is a flow chart, following the flowchart shown in FIG. 19, for explaining the operation performed in the modification of the second embodiment of the service providing system according to the present invention.

### Description of the Preferred Embodiments

Preferred embodiments according to the present invention will be described with reference to the drawings, hereinlater.

### (First preferred embodiment according to the present invention)

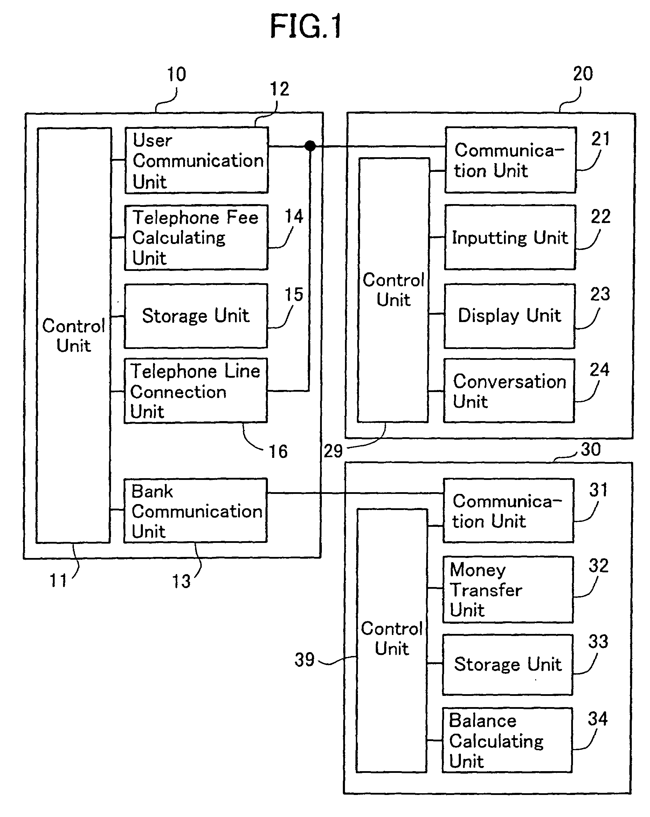

Referring to FIG. 1 to FIG. 7 of the drawings, there is shown a first embodiment of a service providing system for providing a service via a communication line according to the present invention. In the present embodiment according to the present invention, the service is provided via a telephone communication line.

The construction of the present embodiment will be described hereinlater. The service providing system for providing a service via a communication line according to the present invention comprises a center apparatus 10 on the side of a service provider providing the service via the communication line. The center apparatus 10 on the side of the service provider comprises a control unit 11, which is constituted by a computer, a user communication unit 12 for communicating with a service user, a bank communication unit 13 for communication with a financial institute such as, for example, a bank, hereinlater simply referred to as "bank", a telephone fee calculating unit 14 for calculating a telephone fee, which is a line communication fee according to the present invention, a storage unit 15 for storing service user managing information, and a telephone line connection unit 16 for connecting service users with respective telephone lines.

The center apparatus 10 on the service provider side, hereinlater simply referred to as "service provider center apparatus", is capable of communicating with a terminal apparatus 20 on the side of a service user, hereinlater simply referred to as "service user terminal apparatus", for utilizing a connection service provided via a communication line, such as, for example, a telephone line, and a center apparatus 30 on the side of a bank, i.e., a settlement institute, hereinlater simply referred to as "bank center apparatus", by means of a predetermined communication system (such as, for example, wire communication system, a radio communication system, or the like). The "service user" herein used is intended to mean a person who is charged by the service provider for a connection service provided via a communication line. A person may make, for example, a telephone call in Japan to receive a connection service via a telephone communication line provided by a telephone company. In this case, the person making a telephone call corresponds to the service user, and the telephone company providing the connection service via the telephone communication line corresponds to the service provider. The bank center apparatus 30 may be provided in, for example, a major bank, a local bank, a credit association, and the like. The bank center apparatus 30 constitutes the settlement institute according to the present invention. According to the present invention, the service provider is not limited to the telephone company. The service provider may be, for example, an internet service provider. The service via a communication line is not limited to the connection service via the telephone communication line. According to the present invention, the service via a communication line may be, for example, a delivery service of delivering paid online content such as, for example, content for audio/video entertainment via a communication line such as, for example, an internet.

The control unit 11 of the service provider center apparatus 10 is adapted to execute a control program, which will be described later, stored in an internal storage unit, not shown, to control the user communication unit 12, the bank communication unit 13, the telephone fee calculating unit 14, and the storage unit 15. The control unit is adapted to generate a communication connection fee bill on the basis of the telephone fee calculated by the telephone fee calculating unit 14, and transmit the communication connection fee bill to the bank center apparatus 30. The control unit 11 constitutes the computer of the service provider according to the preset invention for providing a service via a communication line for a communication unit 21 of the service user terminal apparatus 20 accompanied by an instant settlement process, wherein the service user has a settlement account at a settlement institute, the service is provided by a service provider, the settlement institute has a computer, and the computer of the settlement institute is operative to settle a fee in respect of the service with the settlement account of the service user. The control unit 11 is adapted to execute the control program stored in the internal storage unit to request a control unit 39 of the bank center apparatus 30, i.e., a computer of the bank center apparatus 30, to perform a set of settlement processes to check an available balance on the settlement account of the service user, to judge whether or not the balance on the settlement account of the service user is greater than a predetermined communication connection fee, i.e., whether or not it is possible to charge a predetermined amount of the communication connection fee to the settlement account of the service user, and to charge a predetermined communication connection fee to the settlement account of the service user if it is judged that it is possible. This means that the control unit 11 functions as settlement request means according to the present invention. The "available balance on the settlement account of the service user" herein used is intended to mean, by way of example, but not limited to, a balance on the settlement account of the service user. In some practice, the "available balance on the settlement account of the service user" may mean an amount of money, which can be charged to the settlement account of the service user. According to the present invention, the control unit 11 functions as report request means for requesting a report with respect to the settlement process, and determining means for determining whether providing the service is permitted or not on the basis of the report in response to a connection request from the communication unit of the service user.

The user communication unit 12 is adapted to receive a connection request or disconnection request from the service user terminal apparatus 20, to establish a telephone line connection and disconnect the line connection to communicate with another service user, and to transmit a message to a service user. The telephone fee calculating unit 14 can calculate a line communication fee on the basis of factors such as, for example, an amount of service utilization, a distance between the service provider and the service user, a communication area, a discount, and the like, upon a request from the service user terminal apparatus 20 for a connection. The amount of service utilization herein used is intended to mean an amount of the service provided to the service user. The amount of service utilization may be determined based on, for example, but not limited to, a utilization period elapsed from a start time when the service starts to be provided until the service is terminated and an amount of communication packets already provided. The storage unit 15 functions as a database for storing service user managing information such as, for example, account identification information indicative of account numbers of the settlement accounts of the service users, and the like.

The service user terminal apparatus 20 is a communication terminal operated by a service user utilizing a service via a communication line. The service user terminal apparatus 20 comprises a communication unit 21. The communication unit 21 is adapted to communicate with external entities such as, for example, terminals. This means that the communication unit 21 is adapted to request the service provider center apparatus 10 to establish a line connection and disconnect the line connection to communicate with a service user, to communicate with other service users via the service provider center apparatus 10, and to receive a message from the service provider through the service provider center apparatus 10. The service user terminal apparatus 20 further comprises an inputting unit 22 for having a telephone number, a Uniform Resource Locator (URL) specifying an access point on the Internet, mail contents, and the like inputted therethrough, a display unit 23 for displaying information on the Internet, contents of the mail received, information received from the service provider, and the like, a conversation unit 24 for modulating and demodulating sound signals to enable service users to make conversations with each other, and a control unit 29 for controlling the communication unit 21, the inputting unit 22, the display unit 23, and the conversation unit 24.

The bank center apparatus 30 partly constitutes the settlement institute according to the present invention for settling a fee in respect of the service with the settlement account of the service user. The bank center apparatus 30 comprises a communication unit 31 for communicating with the service provider center apparatus 10, a money transfer unit 32 for having money transferred between the service users and the settlement institute, a storage unit 33 for storing information such as, for example, an available balance on a settlement account and bills of each of the service users, a balance calculating unit 34 for judging whether or not an available balance on the settlement account of the service user is greater than an amount of money charged by the service provider, i.e., whether or not it is possible to charge the amount of money to the settlement account of the service user, and a control unit 39 for controlling the communication unit 31, the money transfer unit 32, the storage unit 33, and the balance calculating unit 34.

Furthermore, the control unit 11 of the service provider center apparatus 10 may transmit a signal to the control unit 39 of the bank center apparatus 30, i.e., the computer of the settlement institute, to request the computer of the settlement institute to judge an available balance on the settlement account whenever a predetermined amount of service is provided for a predetermined minimum amount of fee, i.e., a predetermine utilization period, a predetermined amount of information (for example, communication packets), or the like.

The balance calculating unit 34 of the bank center apparatus 30 can judge an available balance on the settlement account of the service user. This means that the balance calculating unit 34 is adapted to transmit a report indicative of a result of the judgment on the balance on the settlement account to the service provider center apparatus 10 when the control unit 11 of the service provider center apparatus 10 transmits a communication connection fee bill including account identification information indicative of an account number of the settlement account of the service user, and an amount of money to be paid for the communication connection fee (for example, telephone fee, information delivery fee, and the like). The communication connection fee charge report is received by the control unit 11 of the service provider center apparatus 10 through the bank communication unit 13, and then transferred to the telephone fee calculating unit 14.

The storage unit 33 of the bank center apparatus 30 constitutes the identification information storage means according to the present invention for storing settlement institute identification information used to identify a settlement institute from among a plurality of settlement institutes such as, for example, banks, and account identification information indicative of an account number of the settlement account of the service user. The settlement institute identification information may be, for example, identification numbers. Furthermore, the storage unit 33 is adapted to store an amount of money transferred (the amounts of money paid and received) for each of the settlement accounts of the service users.

The control unit 39 of the bank center apparatus 30 is adapted to have the balance calculating unit 34 judge the balance on the settlement account of the service user on the basis of the information stored in the storage unit 33.

Furthermore, the control unit 39 constitutes the report making means according to the present invention for making a report on the settlement process including an amount of money paid. The control unit 39 is adapted to have the money transfer unit 32 settle an amount of fee if the balance on the settlement account of the service user is greater than an amount of fee to be paid. This means that the control unit 39 is operative to have the money transfer unit 32 transfer the amount of fee to be paid, from the settlement account of the service user to a specified account of the service provider. The control unit 39 is then operative to make the report on the settlement process including the amount of money paid being fulfilled when the amount of money to be paid has been transferred from the settlement account of the service user to the specified account of the service provider. The control unit 39, on the other hand, is operative to make the report on the settlement process including an amount of money paid being zero when it is judged that the balance on the settlement account is less than the amount of money to be paid, and the amount of money to be paid is not transferred from the settlement account of the service user to the specified account of the service provider.

Furthermore, the control unit 11 of the service provider center apparatus 10 functions as the determining means for determining whether providing the connection service via the telephone line (communication line) is permitted or not depending on whether the amount of money paid included in the report is fulfilled or zero.

From the foregoing description, it is to be understood that the service provider center apparatus 10 for providing a service via a communication line is operative to provide a service via a communication line for a communication unit of the service user terminal apparatus accompanied by an instant settlement process, wherein the service user has a settlement account at a settlement institute, the service is provided by a service provider, the settlement institute has a computer, and the computer of the settlement institute is operative to settle a fee in respect of the service with the settlement account of the service user. The service provider center apparatus 10 thus constructed is operative to request the bank center apparatus 30 to perform a set of settlement processes to check an available balance on the settlement account of the service user, to judge whether or not the balance on the settlement account of the service user is greater than a predetermined communication connection fee, and to charge a predetermined communication connection fee to the settlement account of the service user if it is judged that it is possible. Further, the service provider center apparatus 10 thus constructed is operative to request a report with respect to the settlement process, and determine whether providing the service is permitted or not on the basis of the report.

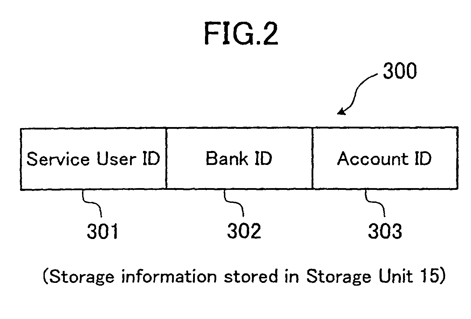

FIG. 2 shows a structure of storage information stored in the storage unit 15 of the service provider center apparatus 10.

As shown in FIG. 2, a record of the storage information 300 stored in the storage unit 15 comprises service user identification information 301, designated by "Service User ID", for specifying a service user terminal apparatus 20, settlement institute identification information 302, designated by "Bank ID", used to identify a settlement institute at which the service user has the settlement account, and account identification information 303, designated by "Account ID" indicative of a account number of the settlement account of the service user. The account ID 303 includes a branch office ID for specifying a branch office at which the service user has the settlement account. Each of information elements constituting the storage information 300 has a number systematically assigned for each of the service users so as to be identified by the number.

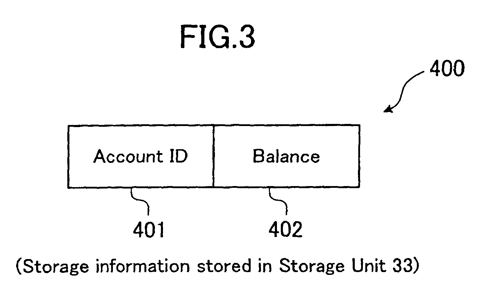

FIG. 3 shows a structure of storage information stored in the storage unit 33 of the bank center apparatus 30.

As shown in FIG. 3, a record of the storage information 400 stored in the storage unit 33 comprises account identification information 401, designated by "Account ID" indicative of the account number of the settlement account of the service user, and balance information 402, designated by "Balance", indicative of a balance on the settlement account. The account ID 401 includes a branch office ID for specifying a branch office (for example, a local branch of the bank) at which the service user has the settlement account. Each of information elements constituting the storage information 400 has a number systematically assigned for each of the service users so as to be identified by the number. The balance information 402 is expressed in terms of an amount of money, for example, yen, and indicating the available balance on the settlement account of each of the service users.

Information exchanged between the service provider and the settlement institute will be described hereinlater.

In the present embodiment, the service provide center apparatus 10 is communicated with the bank center apparatus 30 by means of the bank communication unit 13 of the service provider center apparatus 10, the communication unit 31 of the bank center apparatus 30, and a communication line (for example, a telephone line) between the bank connecting therebetween. The service provider center apparatus 10 is operative to transmit a communication connection fee bill to the bank center apparatus 30 while, on the other hand, the bank center apparatus 30 is operative to transmit a predetermined report such as, for example, a report indicative of a result of the charging process of the communication connection fee to the service provider center apparatus 10.

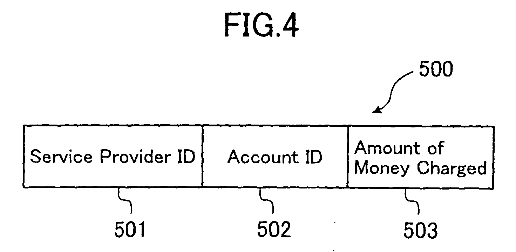

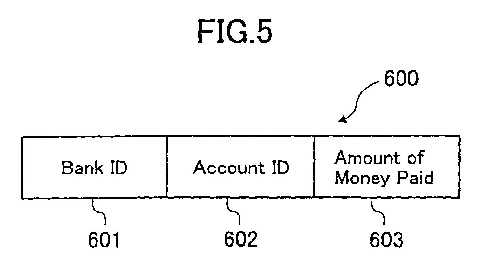

A structure of the communication connection fee bill transmitted from the service provider center apparatus 10 is shown in FIG. 4. A structure of the report indicative of the result of the charging process of the communication connection fee transmitted from the bank center apparatus 30 is shown in FIG. 5.

As best shown in FIG. 4, a telephone fee bill 500 (communication connection fee bill) comprises service provider identification information 501, designated by "Service Provider ID", for specifying a service provider center apparatus 10, account identification information 502, designated by "Account ID", indicative of an account number of the settlement account of the service user, and an amount of money charged 503 for indicating an amount of money to be paid for the communication connection fee. The account ID 502 also includes a branch office ID for specifying a branch office (for example, a local branch of the bank) at which the service user has the settlement account. Each of information elements constituting the communication connection fee bill 500 has a number systematically assigned for each of the service users so as to be identified by the number. The amount of money charged 503 is expressed in terms of an amount of money, for example, yen.

As shown in FIG. 5, the report indicative of the result of the charging process of the communication connection fee 600 comprises settlement institute identification information 601, designated by "Bank ID", used to identify the bank center apparatus 30, account identification information 602, designated by "Account ID" indicative of the account number of the settlement account of the service user terminal apparatus 20, and an amount of money paid 603 for indicating the amount of money paid for the communication connection fee. The account ID 602 also includes a branch office ID for specifying a branch office (for example, a local branch of the bank) at which the service user has the settlement account. Each of information elements constituting the report indicative of the result of the charging process of the communication connection fee 600 has a number systematically assigned for each of the service users so as to be identified by the number. The amount of money paid 603 is expressed in terms of an amount of money, for example, yen.

The operation of the present embodiment of the service providing system will be described hereinlater.

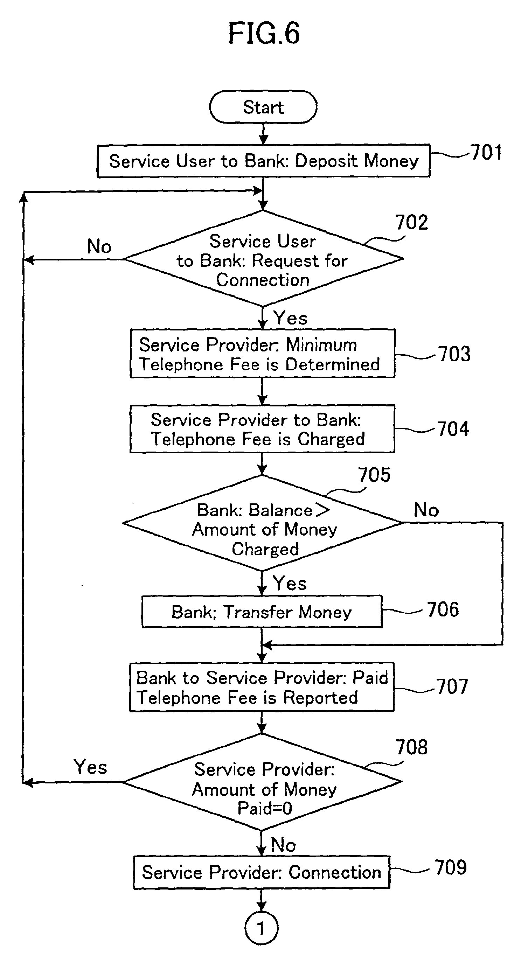

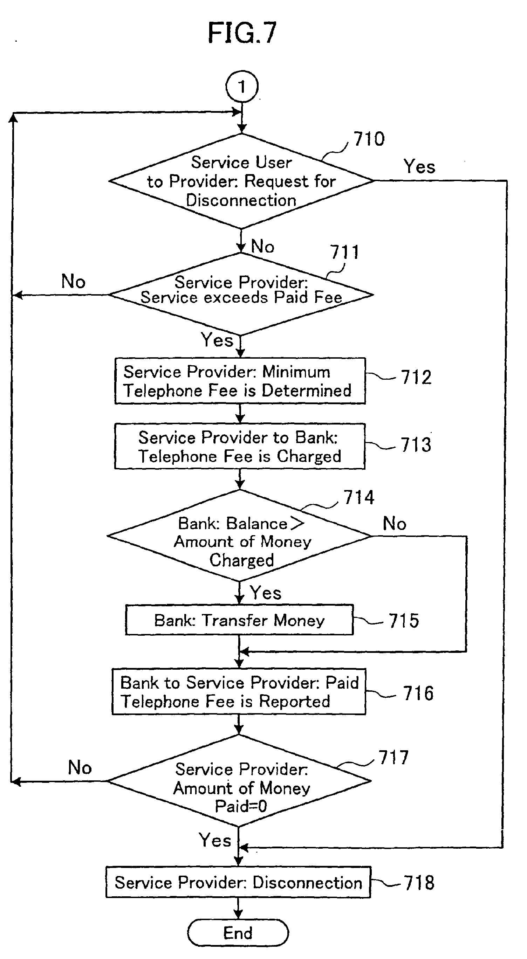

Control operations performed by the control unit 11 of the service provider center apparatus 10 and the control unit 39 of the bank center apparatus 30 will be described hereinlater with reference to flowcharts shown in FIG. 6 and FIG. 7.

As a preparing step, a service user registers with the service provider center apparatus 10 for a service. In this step, the service user inputs his or her bank account as an account (settlement account) of the service user to be used for paying a communication connection fee.

Preferably, the settlement account is an account dedicated to, but not limited to, a service provided via a communication line. It is, however, not necessary to open a new bank account additionally for the settlement account. Any bank account already opened for other purposes such as, for example, a salary deposit may be used as the settlement account. Furthermore, the settlement account is required to be uniquely associated with the service user terminal apparatus 20, but not necessarily be an account opened in a name of the service user. For example, a plurality of service users paying their service fees in a corporate name may have the same settlement account opened in the corporate name. The service users may know the contents of the service (for example, a communication connection fee in relation to a distance between the service provider and the service user, and a time zone) in advance. Furthermore, the service provider center apparatus 10 is operated to store the information inputted by the service user at the registration in the storage unit 15 as managing information.

In step 701, a service user deposits money to his or her settlement account (step 701). Step 701 goes forward to step 702, in which the service user operates the service user terminal apparatus 20 so that the communication unit 21 is operated to request the service provider center apparatus 10 for a connection (step 702). The service user may, for example, off-hook a handset, and dial a telephone number to make the connection request.

Step 702 goes forward to step 703, in which the service provider center apparatus 10 is operated to receive the request for a connection from the service user terminal apparatus 20, and to identify the service user with reference to information such as, for example, the telephone number (step 703). The telephone fee calculating unit 14 of the service provider center apparatus 10 may calculate a minimum amount of the communication connection fee on the basis of factors such as, for example, an amount of service utilization, a distance between the service provider and the service user, a communication area, a discount, and the like, upon receiving the request from the service user terminal apparatus 20 for a connection. The amount of service utilization may be determined based on, for example, but not limited to, a utilization period elapsed from a start time when the service starts to be provided until the service is terminated and an amount of communication packets already provided.

Step 703 goes forward to step 704, in which the service provider center apparatus 10 is operated to identify a settlement account of the service user on the basis of the settlement institute identification information 302 stored in the storage unit 15, and to transmit a communication connection fee bill 500 to the settlement institute by means of the bank communication unit 13 so as to charge the communication connection fee calculated in step 703 (step 704).

The structure of the communication connection fee bill 500 has been already described with reference to the drawings shown in FIG. 4. The service provider identification 501, which specifies a service provider center apparatus 10, has a number approved by banks and service providers, and systematically assigned. The account identification information 502 is substantially the same as the account identification information 303, and the amount of money charged 503 is constituted by the communication connection fee calculated in step 703.

The communication unit 31 of the bank center apparatus 30 is operated to receive the communication connection fee bill 500 from the service provider center apparatus 10. The balance calculating unit 34 is then operated to search a record having account identification information 401, which is equal to the account identification information 502 of the communication connection fee bill thus received, from among information stored in the storage unit 33, and to judge whether of not the balance on the balance information 402 of the record is greater than the amount of money charged 503 thus received (step 705).

If it is judged in step 705 that the balance is greater than the amount of money charged, the bank center apparatus 30 is operated to collect the amount of money charged 503 from the settlement account of the service user specified by the account identification information 502, and to transfer the amount of money charged 503 to the account of the service provider specified by the service provider identification information 501 (step 706). The bank center apparatus 30 is then operated to make a report indicative of a result of the charging process of the communication connection fee, and to transmit the report to the service provider center apparatus 10 by means of the communication unit 31 (step 707).

The report indicative of a result of the charging process of the communication connection fee is the same in construction as the report shown in FIG. 5. The settlement institute identification information 601 has a number approved by banks and service providers, and systematically assigned for each of the settlement institutes, such as banks so as to be identified by the number. The account identification information 602 is constituted by the account identification information 502 of the communication connection fee bill received from the service provider center apparatus 10. The amount of money paid 603 indicates that the amount of money paid is fulfilled, and is constituted by the amount of money charged 503 of the communication connection fee bill received from the service provider center apparatus 10.

If it is judged in step 705 that the balance is less than the amount of money charged, money is not transferred. The bank center apparatus 30 is operated to transmit a report indicative of a result of the charging process of the communication connection fee (step 707).

In this report indicative of a result of the charging process of the communication connection fee, the settlement institute identification information 601 and the account identification information 602 are the same as those of the report made when it was judged that the balance is greater than the amount of money charged. The amount of money paid 603 indicates that the amount of money paid is zero.

The service provider center apparatus 10 is operated to receive the report indicative of the result of the charging process of the communication connection fee 600 from the bank center apparatus 30 through the bank communication unit 13, and to judge whether the amount of money paid 603 indicated in the report 600 is fulfilled or zero (step 708).

The service provider center apparatus 10 is operated to judge whether providing the telephone (communication line) connection service is permitted for the service user terminal apparatus 20 or not based on the result of the judgment made in the aforesaid step.

If it is judged that the amount of money paid 603 is zero ("YES" in step 708), the service provider center apparatus 10 is operated to judge that providing the service is not permitted for the service user terminal apparatus 20 and to notify the service user terminal apparatus 20 that the service is not permitted. The service user terminal apparatus 20 is operated to notify the service user that the line connection service is not permitted because the balance is not sufficient.

If it is, on the other hand, judged that the amount of money paid 603 is not zero ("NO" in step 708), the service provider center apparatus 10 is operated to judge that providing the service is permitted for the service user terminal apparatus 20, to connect the service user terminal apparatus 20 with a specified terminal by means of the telephone line connection unit 16, and to notify the service user terminal apparatus 20 of the amount of money paid (step 709).

In this step, the service user terminal apparatus 20 is operated to notify the service user of the amount of money paid, and to be connected with the specified terminal while the communication connection fee, i.e., the service fee in respect of the service, is transferred from the settlement account of the service user to the service provider center apparatus 10 in a similar manner that the service user is making a telephone call from a public telephone.

When the service user terminal apparatus 20 requests the service provider center apparatus 10 for disconnection while communication connection fee already paid is still available for the service ("YES" in step 710), the service provider center apparatus 10 is operated to receive the disconnection request from the service user terminal apparatus 20 by means of the user communication unit 12, and to disconnect the specified connection by means of the telephone line connection unit 16 (step 718).

When, on the other hand, the service provider center apparatus 10 does not receive the disconnection request from the service user terminal apparatus 20 while communication connection fee already paid is still available for the service ("NO" in step 710), the service provider center apparatus 10 is operated to judge whether or not an amount of fee required for an amount of service accumulatively provided is greater than an amount of communication connection fee already paid (step 711), and to transmit an additional communication connection fee bill 500 via the bank communication unit 13 to the bank center apparatus 30 when it is judged that the amount of fee required for an amount of service accumulatively provided is greater than the amount of communication connection fee already paid (step 713).

In these steps, the service provider center apparatus 10 may calculate and determine another minimum amount of the communication connection fee different from the predetermined minimum amount of the communication connection fee, if required (step 712), before transmitting the additional communication connection fee bill 500 to the bank center apparatus 30. Alternatively, the service provider center apparatus 10 may solely confirm that the predetermined minimum amount of the communication connection fee remains the same amount. An initial amount of fee, for example, a predetermined minimum fee, may be charged to the settlement account of the service user before the service is provided for the service user terminal apparatus 20 (step 713).

The bank center apparatus 30 is then operated to carry out operations in a manner similar to step 705 to step 708. This means that the bank center apparatus 30 is operated to check and judge the balance on the settlement account of the user (step 714), to transfer money in accordance with the result of the judgment (step 715), and to transmit the report indicative of the result of the charging process of the communication connection fee 600 to the service provider center apparatus 10 (step 716).

The service provider center apparatus 10 is then operated to receive the report indicative of the result of the charging process of the communication connection fee 600 through the bank communication unit 13, and to disconnect the connection when the amount of money paid 603 is zero (step 717).

In the present embodiment, the service user terminal apparatus 20 may notify the service user of the communication connection fee transmitted from the service provider center apparatus 10 until the telephone connection is disconnected, so that the service user can confirm the money to be charged for the service user terminal apparatus 20, thereby enabling the service user to judge at any time whether or not the telephone line is excessively utilized. Furthermore, the service user terminal apparatus 20 may continue to display the communication connection fee for a predetermined time period (for example, a few seconds) after the connection is disconnected, thereby making it possible for the service user to confirm the total amount of money charged for the service utilized by the service user terminal apparatus 20.

When it is judged that the amount of fee required for the amount of service such as, for example, the utilization period, the amount of packets, or the like, accumulatively provided exceeds the amount of communication connection fee already paid ("YES" in step 711), the bank center apparatus 30 is operated to check and judge the balance on the settlement account of the user in response to the connection request (steps 711 to 714), and to transfer money in accordance with the result of the judgment (step 715), thereby making it possible for the service user terminal apparatus 20 to continuously utilize the service via the communication line. When, on the other hand, it is judged that the balance on the settlement account is less than a predetermined communication connection fee ("NO" in step 714), the report indicating that the balance on the settlement account is not sufficient is transmitted to the service user terminal apparatus 20, and the service provided via the communication line is terminated. (Process performed on the side of the service provider in response to connection request)

In the service provider center apparatus 10, the control unit 11 is operated to control the telephone line connection unit 16 to start a connection process to establish a connection, when the user communication unit 12, which constitutes service request receipt means, receives a communication line connection request from the service user terminal apparatus 20. The service provider center apparatus 10 can simultaneously perform a plurality of connection processes for a plurality of service users on the basis of the service user identification information 301.

When, on the other hand, the service provider center apparatus 10 receives a communication line disconnection request from the service user terminal apparatus 20, the control unit 11 is operated to control the telephone line connection unit 16 to perform a disconnection process on the basis of the service user identification information 301.

The connection process performed by the service provider center apparatus 10 will described in detail, hereinlater. The service provider center apparatus 10 is operated to identify a service user on the basis of the service user identification information 301, and to calculate a line communication fee on the basis of factors such as, for example, an amount of service utilization, a distance between the service provider and the service user, a communication area, a discount uniquely determined for the service user, and the like, upon a request from the service user terminal apparatus 20 for a service. The amount of service utilization herein used is intended to mean an amount of the service provided to the service user. The amount of service utilization may be determined based on, for example, but not limited to, a utilization period elapsed from a start time when the service starts to be provided until the service is terminated and an amount of communication packets already provided. The service provider center apparatus 10 is then operated to obtain settlement institute identification information 302 and account identification information 303 of the service user on the basis of the service user identification information 301 stored in the storage unit 15, and to transmit a communication connection fee bill to the bank center apparatus 30 specified by the settlement institute identification information 302, through the bank communication unit 13.

As shown in FIG. 4, the communication connection fee bill comprises service provider identification information 501, designated by "Service Provider ID", for specifying a service provider, account identification information 502, designated by "Account ID", having a number approved by banks and service providers, and systematically assigned for each of the service providers, and an amount of money charged 503 for indicating an amount of money to be paid for the communication connection fee.

The service provider center apparatus 10 is then operated to receive the report indicative of a result of the charging process of the communication connection fee through the bank communication unit 13 of the service provider center apparatus 10, to judge whether the amount of money paid is zero or not (step 717), to establish or continue a line connection by means of the telephone line connection unit 16 when it is judged that the amount of money paid is not zero, to notify the service user terminal apparatus 20 that the communication connection fee has been paid, and to perform a subsequent process, which will be described later. The service provider center apparatus 10, on the other hand, is operated to notify the service user terminal apparatus 20 that the balance on the settlement account is not sufficient, and to terminate the process when it is judged that the amount of money paid is zero.

### (Subsequent process on the side of the service provider)

The subsequent process performed by the service provider center apparatus 10 will be described hereinlater. The service provider center apparatus 10 is operated to judge whether or not a disconnection request for the service provided via the telephone line is received (step 710). If it is judged that the disconnection request is received, the service provider center apparatus 10 is operated to disconnect the line (step 718), and terminate the process.

If it is, on the other hand, judged that the disconnection request is not received, the service provider center apparatus 10 is operated to judge whether or not an amount of fee required for an amount of service accumulatively provided exceeds the amount of communication connection fee already paid (step 711). If it is judged that the amount of fee required for an amount of service accumulatively provided does not exceed the amount of communication connection fee already paid, step 711 goes back to step 710, in which the service provider center apparatus 10 is operated to judge whether or not a disconnection request for the service provided via the telephone line is received.

If it is, on the other hand, judged that the amount of fee required for an amount of service accumulatively provided exceeds the amount of communication connection fee already paid, the service provider center apparatus 10 is operated to calculate and determine an additional line communication fee (step 712), and to transmit the additional communication connection fee bill to the bank center apparatus 30 (step 713).

Upon receiving the report indicative of the result of the charging process of the communication connection fee from the bank center apparatus 30 (step 716), the service provider center apparatus 10 is operated to judge whether the amount of money paid is zero or not (step 717). If it is judged that the amount of money paid is not zero, step 717 goes back to step (step 710), in which the service provider center apparatus 10 is operated to judge whether or not a disconnection request for the service provided via the telephone line is received.

If it is, on the other hand, judged that the amount of money paid is zero, the service provider center apparatus 10 is operated to transmit a report indicating that the balance on the settlement account is not sufficient to the service user and disconnect the line (step 718).

### (Account management and report processes performed on the side of the settlement institute)

The bank center apparatus 30 is operated to create a record of account managing information on a service user, i.e., a new record of storage information 400, if requested, and store it in the storage unit 33. Further, the bank center apparatus 30 is operated to receive a telephone fee bill 500 from a service provider center apparatus 10 by means of communication unit 31, to perform a money transferring process, and to transmit a report indicative of the result of the charging process of the communication connection fee 600 to the service provider center apparatus 10.

The bank center apparatus 30 does not recognize the telephone fee bill 500 and the report indicative of the result of the charging process of the communication connection fee 600 as special information related to communication connection fees, but just process them as parts of usual money transfer requests and money transfer reports. The telephone fee bill 500 and the report indicative of the result of the charging process of the communication connection fee 600 are similar in construction to a money transfer request and a money transfer report.

The money transferring process performed by the bank center apparatus 30 will be described hereinlater.

The bank center apparatus 30 is operated to confirm that a service user deposits money to his or her settlement account, and identify an account of a service provider charging the money on the basis of the service provider identification 501 of the line fee bill 500. Further, the bank center apparatus 30 is operated to identify a settlement account of the service user on the basis of the account identification information 502.

The bank center apparatus 30 is then operated to search a record of the account managing information having an account of a service user utilizing the service on the basis of the storage information stored in the storage unit 33. The bank center apparatus 30 is operated to create a report indicative of the result of the charging process of the communication connection fee 600 indicating that the amount of money transferred is "zero", and to terminate the process if no record is found.

The bank center apparatus 30 is, on the other hand, operated to obtain balance information on the record, i.e., service user's account managing information record, and to judge whether or not the balance on the balance information is greater than the amount of money charged 503 of the telephone fee bill 500 if the record of the account managing information having the account of the service user utilizing the service, referred to simply as "service user's account managing information record", is found (step 705).

If it is judged that the balance of the service user's account managing information record is greater than the amount of money charged 503 of the telephone fee bill 500, the bank center apparatus 30 is operated to update the account managing information records of the service provider and the service user so that the amount of money equal to the amount of money charged is transferred from the service user's account to the service provider's account (step 706), to create and transmit a report indicative of the result of the charging process of the communication connection fee 600 (step 707), and to terminate the process.

The service user's account managing information record is updated in a manner that the amount of money charged 503 is subtracted from the balance, and the service user's account managing information record is updated in a manner that the amount of money charged 503 is added to the balance.

If it is, on the other hand, judged that the balance of the service user's account managing information record is less than the amount of money charged 503 of the telephone fee bill 500, the bank center apparatus 30 is operated to create and transmit a report indicative of the result of the charging process of the communication connection fee 600 indicating that the amount of money paid is "zero", and to terminate the process.

The report indicative of the result of the charging process of the communication connection fee 600 comprises settlement institute identification information 601 used to identify the bank center apparatus 30, account identification information 602 indicative of the account number of the settlement account of the service user, and an amount of money paid 603 for indicating the amount of money paid for the current communication connection fee.

As will be seen from the foregoing description, it is to be understood that the present embodiment of the system for providing a service via a communication line accompanied by a settlement can prevent to charge a large amount of communication connection fee in comparison with a conventional system for charging a communication connection fee in respect of the service provided via a line for a long period such as, for example, one month. This means that the present embodiment of the system according to the present invention can solve a problem of failing to collect the large amount of communication fee and minimize the risk of failing to collect a service fee in respect of the service already provided. This leads to the fact that the present embodiment of the system can eliminate the need of the conventional insurance fee, which has been paid for the insurance to protect the service providers against the risks, thereby reducing the service fee in respect of the service in comparison with the conventional system. Furthermore, the present embodiment of the system can provide a service in response to a service user's connection request accompanied with an instant settlement, thereby making it possible to protect the service users against risks of failing to receive services in return for the service fee already paid.

The bank center apparatus 30 is operative to transmit a report indicative of the result of the charging process of the communication connection fee 600 indicating that the amount of money paid is "zero" to the service provider center apparatus 10 if the balance of the service user's account managing information record is less than the amount of money charged, thereby leading to the fact that the service provider center apparatus 10 does not need to store the amount of money charged for each of the service users. Further, the bank center apparatus 30 thus constructed makes it easy for the service provider center apparatus 10 to judge whether establish or disconnect a line connection.

Preferably, the service provider center apparatus 10 should be connected with the bank center apparatus 30 via a dedicated line because of the fact that traffics transmitted and received between the service provider center apparatus 10 and the bank center apparatus 30 may increase. The service provider center apparatus 10 is connected with the bank center apparatus 30 via, for example, a dedicated line, the service provider identification information 501 of the telephone fee bill 500 and the settlement institute identification information 601 of the report indicative of the result of the charging process of the communication connection fee 600 can be omitted, reducing the amount of information transmitted and received between the service provider center apparatus 10 and the bank center apparatus 30, thereby making it possible for the service provider center apparatus 10 to communicate with the bank center apparatus 30.

### (Advantage of the system for providing a service via a communication line accompanied by a settlement)

From the foregoing description, it is to be understood that the present embodiment of the system for providing a service via a communication line for a communication unit of the service user terminal apparatus 20 wherein the service user has a settlement account at a bank center apparatus 30, enables the bank center apparatus 30 to perform an instant settlement process to charge a service fee in respect of the service provided to the settlement account and transmit a report indicative of a result of the settlement process via the communication line. Upon requesting the bank center apparatus 30 to charge a communication connection fee to the settlement account of the service user, by the service provider center apparatus 10, the bank center apparatus 30 is operative to judge whether or not it is possible to charge a predetermined amount of the communication connection fee to the settlement account of the service user, and to charge a minimum amount of the communication connection fee to the settlement account of the service user as a charging process if it is judged that it is possible. Further, the bank center apparatus 30 is operative to transmit a report indicative of a result of the charging process to the service provider center apparatus 10, and the service provider center apparatus 10 is operative to determine whether or not the service via the communication line is permitted in accordance with the report indicative of the result of the charging process. Accordingly, the service provider center apparatus 10, which determines whether or not the service is permitted in accordance with the report indicative of the result of the charging process from the bank center apparatus 30, can prevent a risk of failing to collect the service fee, thereby eliminating the need of the conventional insurance fee, which has been paid for the insurance to protect the service providers against the risk, thereby reducing the service fee in respect of the service provided via the communication line.

In the present embodiment of the system, a predetermined initial amount of fee (a predetermined minimum amount of money) is charged to the settlement account of the service user before the service is provided for service user terminal apparatus 20 via the communication line, the service provider center apparatus 10 is operative to request the bank center apparatus 30 to charge an additional amount of fee in respect of a service to be continued to the settlement account of the user if an amount of fee required for an amount of service such as, for example, a utilization period, accumulatively provided is greater than an amount of fee already paid, and the bank center apparatus 30 is operative to judge whether or not it is possible to charge the additional amount of fee to the settlement account of the user, to charge the additional amount of fee to the settlement account of the user as a charging process if it is judged that it is possible, and to transmit a report indicative of a result of the charging process to the computer of the service provider. The service provider center apparatus 10 is operative to determine whether or not the service is to be continued in accordance with the report indicative of the result of the charging process. The present embodiment of the system thus constructed can enable the service provider to prevent a risk of failing to collect a service fee in respect to the service already provided via the communication line.

Furthermore, the present embodiment of the system, in which the service provider center apparatus 10 is operative to charge the bank center apparatus 30 for the communication connection fee after the service starts to be provided, and the bank center apparatus 30 is operative to charge the communication connection fee charged by the computer of the service provider to the settlement account of the service user, can promptly provide a service for a service user.

### (Second preferred embodiment according to the present invention)

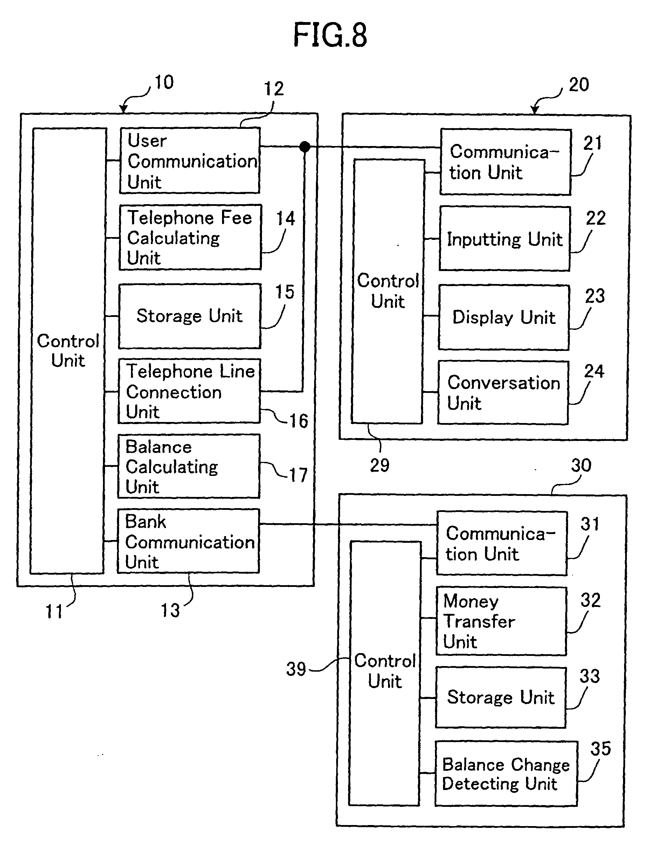

Referring to FIG. 8 to FIG. 18 of the drawings, there is shown a second preferred embodiment of a service providing system for providing a service via a communication line according to the present invention. In the present embodiment according to the present invention, the service is provided via a telephone communication line.

The present embodiment of the system comprises substantially the same constitutional elements as those of the first embodiment of the system as shown in FIG. 8 except for the fact that the service provider center apparatus 10 further comprises a balance calculating unit 17, and the balance calculating unit 34 of the bank center apparatus 30 is replaced by a balance change detecting unit 35. These same constitutional elements are simply represented by the same reference numerals as those of the first embodiment, and will thus be omitted in description for avoiding tedious repetition. The different elements of the present embodiment from those of the aforesaid embodiment will be described hereinlater.

Information transmitted and received between the service provider center apparatus 10 and the bank center apparatus 30 of the present embodiment is different from that of the first embodiment. Control operations performed by the control units 11 and 39 of the second embodiment are different from those of the first embodiment.

The control unit 11 of the service provider center apparatus 10 according to the present invention functions as balance check request means for requesting the bank center apparatus 30 to check an available balance on the settlement account as well as determining means for judging whether or not the balance included in the report is greater than the communication connection fee to be charged, and determining whether providing the service is permitted or not depending on whether the balance is sufficient or not. The control unit 11 is operative to control the balance calculating unit 17 to judge whether or not the balance is greater than an amount of money charged on the basis of the storage information stored in the storage unit 33. The control unit 39 of the bank center apparatus 30 is operated to control the balance change detecting unit 35 to detect a change in the balance on the settlement account of the service user, and to transmit a report indicative of a current balance on the settlement account of the user if any change is detected to the control unit 11.

Information transmitted from the service provider center apparatus 10 to the bank center apparatus 30 comprises request information 800 including balance request 900, telephone fee bill 1000 (communication connection fee bill), or the like.

Information transmitted from the bank center apparatus 30 to the service provider center apparatus 10 comprises report information 1100 including balance report 1200, telephone fee charging report 1300 (report indicative of a result of the charging process of the communication connection fee), or the like.

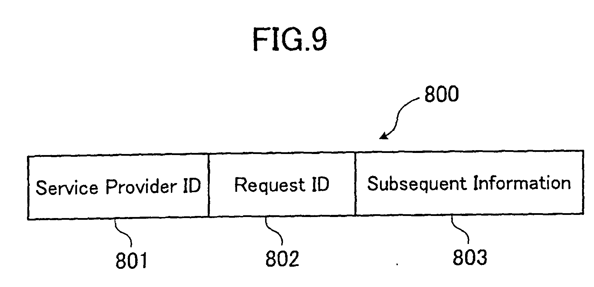

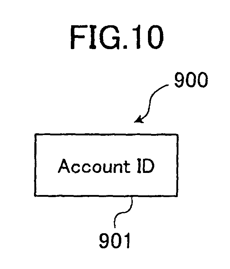

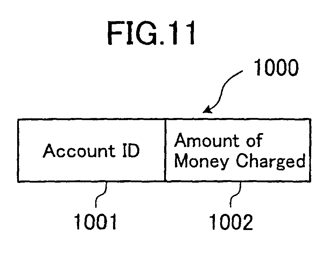

The request information 800 is shown in FIG. 9 as including service provider identification information 801, designated by "Service Provider ID", request identification information 802, designated by "Request ID", and subsequent information 803. The service provider identification information 801 specifies a service provider, and may have, for example, a number systematically assigned for each of the service providers so as to be identified by the number. The request identification information 802 indicates whether the balance request 900 or the telephone fee bill 1000. The request identification information 802 may include, for example, "0" indicating the balance request 900, and "1" for the telephone fee bill 1000. When the request identification information 802 indicates the balance request 900, the subsequent information 803 includes account identification information 901, designated by "Account ID", as shown in FIG. 10. When, on the other hand, the request identification information 802 indicates the telephone fee bill 1000, the subsequent information 803 includes account identification information 1001, designated by "Account ID", and an amount of money charged 1002, as shown in FIG. 11.

The account identification information 901 and 1001 respectively indicate the account number of the settlement account of the service user, and include a branch office ID for specifying a branch office (for example, a local branch of the bank) at which the service user has the settlement account. The amount of money charged 1002 indicates an amount of money charged, and is expressed in terms of an amount of money, for example, yen.

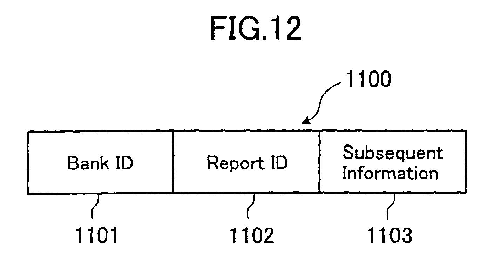

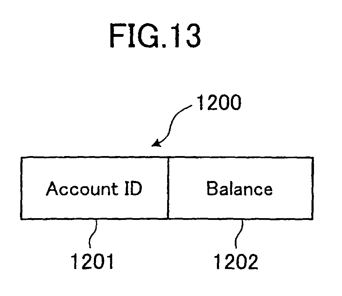

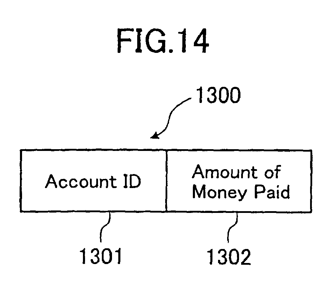

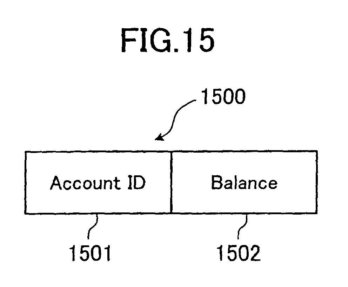

The report information 1100 created by the bank center apparatus 30 is shown in FIG. 12 as comprising settlement institute identification information 1101, designated by "Bank ID", report identification information 1102, designated by "Report ID", and subsequent information 1103. The settlement institute identification information 1101 specifies a settlement institute, and may have, for example, a number systematically assigned for each of the settlement institutes so as to be identified by the number. The report identification information 1102 selectively indicates the balance report 1200, the telephone fee charging report 1300, and a refusal report 1500, which will be described later. The report identification information 1102 may include, for example, "0" indicating the balance report 1200, "1" for the telephone fee charging report 1300, and "2" for the refusal report 1500. When the report identification information 1102 indicates the balance report 1200, the subsequent information 1103 includes account identification information 1201, designated by "Account ID", and balance 1202, as shown in FIG. 13. When, on the other hand, the report identification information 1102 indicates the telephone fee charging report 1300, the subsequent information 1103 includes account identification information 1301, designated by "Account ID", and amount of money paid 1302, as shown in FIG. 14. When the report identification information 1102 indicates the refusal report 1500, the subsequent information 1103 includes account identification information 1501, designated by "Account ID", and balance 1502, as shown in FIG. 15.

The account identification information 1201, 1301, and 1501 shown in FIG. 13, FIG. 14, and FIG. 15, respectively indicate the account number of the settlement account of the service user, and include a branch office ID for specifying a branch office (for example, a local branch of the bank) at which the service user has the settlement account. The balance 1202 shown in FIG. 13 indicates a balance on the settlement account, and is expressed in terms of an amount of money, for example, yen. The amount of money paid 1302 shown in FIG. 14 indicates an amount of money paid, and is expressed in terms of an amount of money, for example, yen. The amount of money paid 1502 shown in FIG. 15 indicates an amount of money paid, and is expressed in terms of an amount of money, for example, yen. It is to be noted that the balance request 900 and the telephone fee bill 1000 hereinlater used may mean the request information 800 including the balance request 900 and the request information 800 including the telephone fee bill 1000, respectively. Similarly, the balance report 1200 and the telephone fee charging report 1300 hereinlater used may mean the report information 1100 including balance report 1200 and the report information 1100 including the telephone fee charging report 1300, respectively.

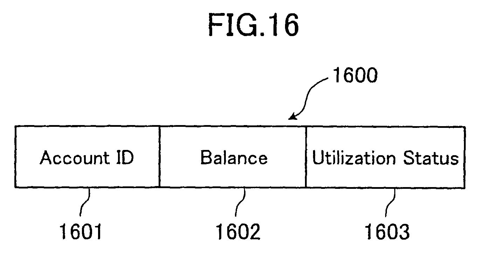

Storage information stored in the storage unit 33 of the bank center apparatus 30 of the present embodiment is different in construction from that of the first embodiment. The storage information 1600 stored in the storage unit 33 of the present embodiment is shown in FIG. 16 as including account identification information 1601, designated by "Account ID" indicative of the account number of the settlement account of the service user, balance information 1602, designated by "Balance", indicative of a balance on the settlement account, and utilization status 1603 for indicating whether the settlement account is in use or not.

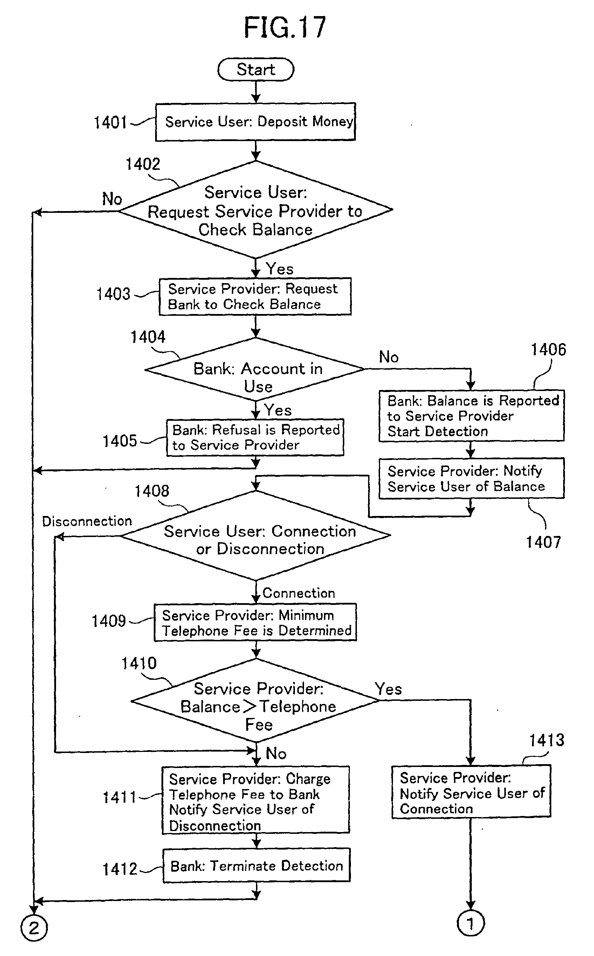

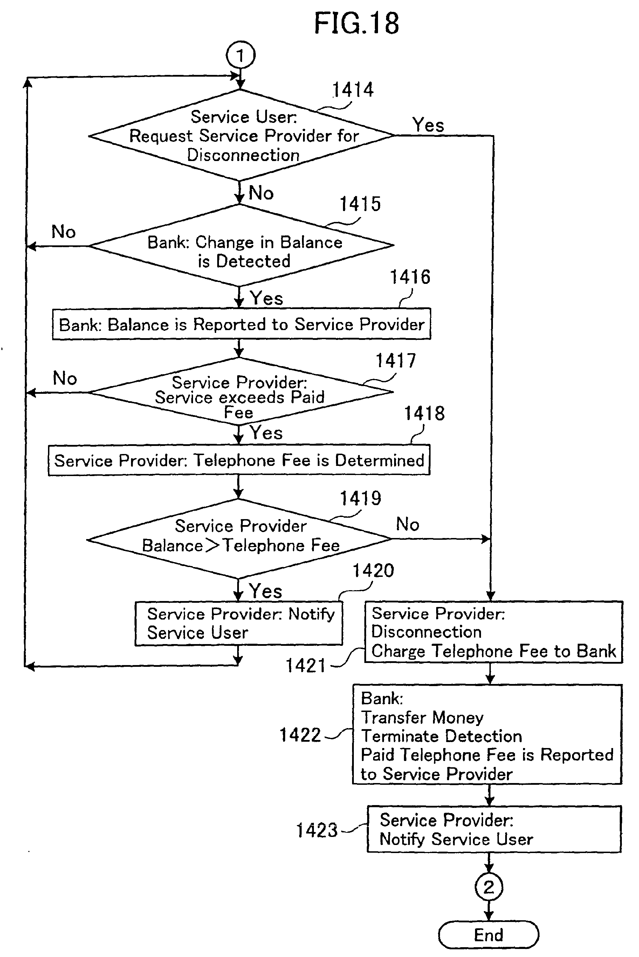

The operation of the present embodiment of the service providing system will be described with reference to the drawings shown in FIG. 17 and FIG. 18, hereinlater.

As best shown in FIG. 17, a service user deposits money to his or her settlement account in similar manner to the process performed by the first embodiment in step 1401 of the flowchart shown in FIG. 7.

Processes performed in step 1402 and steps subsequent to step 1402 are different to those performed by the first embodiment described hereinearlier.

In the second embodiment, the service user requests a service provider to check a balance on the settlement account to make a connection request in step 1402, contrary to the process performed by the first embodiment in step 702, in which the service user requests the service provider for a connection in a manner, for example, the service user off-hooks a handset, and dials a telephone number to make the connection request. This means that the service user may just off-hook a handset, or press a button to request a service provider to check a balance.

Upon receiving the request for checking a balance from the service user terminal apparatus 20 in step 1402, the service provider center 10 is operated to identify the service user identification information 301 with reference to information such as, for example, the telephone number, to obtain settlement institute identification information 302 and account identification information 303 of the service user related to the service user identification information 301 thus identified, and to transmit a request information 800 including a balance request 900 requesting for a balance on the settlement account to the bank center apparatus 30 specified by the settlement institute identification information 302 (step 1403).

The request information 800 is shown in FIG. 9 as comprising service provider identification information 801 specifying the service provider, request identification information 802 indicating whether the balance request or the telephone fee request, and subsequent information 803. When the request identification information 802 indicates the balance request, the subsequent information 803 includes account identification information 901. When, on the other hand, the request identification information 802 indicates the telephone fee request, the subsequent information 803 includes account identification information 1001 and an amount of money charged 1002, as shown in FIG. 11. The service provider identification information 801 may have, for example, a number systematically assigned for each of the service providers so as to be identified by the number.

Upon receiving the request information thus transmitted from the service provider center apparatus 10 in the aforesaid step 1403, the bank center apparatus 30 is operated to recognize the balance request 900 with reference to the request identification information 802 contained in the request information 800. Step 1403 goes forward to step 1404, in which the bank center apparatus 30 is operated to judge whether the settlement account of the service user specified by the account identification information 901 is in use or not. If it is judged that the settlement account is in use, step 1404 goes forward to step 1405. If it is, on the other hand, judged that the settlement account is not in use, step 1404 goes forward to step 1406.

In step 1404, the bank center apparatus 30 judges whether the settlement account of the service user is in use or not, in a manner that the bank center apparatus 30 identifies account identification information 1601 with reference to the account identification information 901 of the balance request 900 on the basis of information stored in the storage unit 33 of the bank center apparatus 30, and detect the utilization status 1603 relating to the account identification information 1601.

In step 1405, the bank center apparatus 30 is operated to transmit report information 1100 including a refusal report 1500 to the service provider center apparatus 10. The refusal report 1500 is shown in FIG. 15 as including account identification information 1501, designated by "Account ID", and balance 1502. In the report information 1100, the settlement institute identification information 1101 specifies the settlement institute, i.e., the bank center apparatus 30, and may have, for example, a number systematically assigned for each of the settlement institutes so as to be identified by the number. When the report identification information 1102 indicates the refusal report 1500, the account identification information 1501 of the subsequent information 1103 is constituted by the account identification information 901 of the balance request 900, and the balance 1502 of the subsequent information 1103 is constituted by the balance information 1602 shown in FIG. 16.

If it is, on the other hand, judged in step 1404 that the settlement account is not in use, the bank center apparatus 30 is operated to transmit a balance report 1200 to the service provider center apparatus 10, and the balance change detecting unit 35 is activated to detect an input which is to result in a withdrawal from the settlement account of the service user in step 1406. The balance change detecting unit 35 is operated to detect the input until the bank center apparatus 30 receives a telephone bill 1000 of the account identification information 1001, which is the same as the account identification information 901, from the service provider center apparatus 10.

If the balance change detecting unit 35 does not detect any input, which is to result in a withdrawal from the settlement account of the service user, the bank center apparatus 30 does not perform a balance change request process, which will be described later.

As shown in FIG. 12 and FIG. 11, the balance report 1200 transmitted by the bank center apparatus 30 in step 1406 comprises settlement institute identification information 1101 for specifying the settlement institute of the bank center apparatus 30, report identification information 1102 indicating that the report information includes the balance report, and the subsequent information including the account identification information 1201 for specifying account identification information 901 pertinent to the balance report 900, and balance 1202 indicating the balance on the settlement account, which is the same as that of balance information 1602. The settlement institute identification information has a number approved by banks and service providers, and systematically assigned for each of the settlement institutes, such as banks, so as to be identified by the number.

Upon receiving the balance report 1200 from the bank center apparatus 30, the service provider center apparatus 10 is operated to transmit a signal indicating the balance to the service user terminal apparatus 20 (step 1407).

The service user confirms the balance received by the terminal apparatus 20, and determines whether to utilize the communication line or not (step 1408). If it is determined by the service user that the service provided via the communication line is not utilized, the service user requests the service provider for a disconnection in a manner, for example, that the service user presses a button again or on-hooks the handset to transmit the disconnection request to the service provider center apparatus 10.

If it is, on the other hand, determined by the service user that the service provided via the communication line is utilized, the service user may, for example, input a telephone number of a terminal to which the service user wishes to call, and the service provider center apparatus 10 recognizes the input as a request for connection. Upon receiving the connection request, the telephone fee calculating unit 14 of the service provider center apparatus 10 is operated to calculate and determine a minimum amount of the communication connection fee on the basis of factors such as, for example, a distance between the service provider and the service user, a communication area, a start time when the service starts to be provided, and the like (step 1409).

The balance calculating unit 13 is operated to calculate and judge whether or not a balance on the settlement account of the service user is greater than the minimum amount of the communication line fee (step 1410).

When it is judged in step 1410 that the balance is not sufficient, or when it is determined in step 1408 that the communication line is to be disconnected, the service provider center apparatus 10 is operated to receive the disconnection request by means of the user communication unit 12, and transmit a telephone fee bill 1000 to the bank center apparatus 30 by means of the bank communication unit 13. The telephone bill 100 is the same as shown in FIG. 10. The account identification information 901 is included in the subsequent information 803 following the service provider identification information 801 of the request information 800 transmitted in step 1403. This means that the account identification information 1001 of the telephone bill is the same as the account identification information 901. The service provider center apparatus 10 is operated to notify the service user terminal apparatus 20 that the line connection is disconnected by means of the user communication unit 12 (step 1411).

Upon receiving the telephone fee bill 1000 indicating that the amount of money charged is "zero", the bank center apparatus 30 is operated to terminate the balance change detecting unit 35 (step 1412).

If it is, on the other hand, judged in step 1410 that the balance is greater than the telephone fee, the service provider center apparatus 10 is operated to notify the service user terminal apparatus 20 that the connection is established by means of the user communication unit 12 (step 1413).

The service provider center apparatus 10 is operated to judge whether or not the service user terminal apparatus 20 requests for disconnection (step 1414). If it is judged that the service user terminal apparatus 20 does not request for disconnection, the bank center apparatus 30 is operated to detect a change in the balance on the settlement account of the service user since the previous report (step 1415). If any change is detected ("YES" in step 1415), the bank center apparatus 30 is operated to transmit a report indicative of a current balance on the settlement account of the service user, i.e., a balance report, to the service provider center apparatus 10 (step 1416). If no change is detected ("NO" in step 1415), step 1415 goes back to step 1414, in which the service provider center apparatus 10 is operated to judge whether or not the service user terminal apparatus 20 requests for disconnection.

Upon receiving the balance report, the service provider center apparatus 10 is operated to judge whether or not the amount of fee required for the amount of service such as, for example, the utilization period, the amount of packets, or the like, accumulatively provided exceeds the amount of communication connection fee already paid (1417). If it is judged that the amount of fee exceeds the amount of money already paid, the service provider center apparatus 10 is operated to calculate an additional amount of fee in respect of a service to be continued (step 1418), and to compare the current balance on the settlement account of the service user with the fee to be charged (step 1419). If it is judged that the current balance on the settlement account of the service user is greater than the fee to be charged, the service provider center apparatus 10 is operated to determine the service is to be continued, and to transmit a notification that the line connection is continued to the service user (step 1420). Step 1420 goes back to step 1414, in which the service provider center apparatus 10 is operated to judge whether or not a disconnection request is detected.

If it is, on the other hand, judged in step 1414 that the disconnection request is detected, or if it is judged in step 1419 that the current balance on the settlement account of the service user is not sufficient, the service provider center apparatus 10 is operated to disconnect the telephone line connection, and transmit a telephone bill 1000 to the bank center apparatus 30 (step 1421).

Receiving the telephone bill, the bank center apparatus 30 is operated to transfer money on the basis of the telephone bill 1000, to terminate the balance change detecting unit 35, and to transmit a telephone fee charging report 1300 to the service provider center apparatus 10. In this step, the bank center apparatus 30 is operated to subtract an amount of money indicated by the amount of money charged 1002 included in the telephone fee bill 1000 from the amount of money indicated by the balance information 402 pertinent to the account identification information 401 of the service user stored in the storage unit 33 of the bank center apparatus 30 on the basis of the telephone bill 1000. The bank center apparatus 30 is operated to identify an account of the service provider with reference to the service provider identification information 801 of the telephone bill 1000, and to add an amount of money indicated by the amount of money charged 1002 to an amount of money indicated by the balance information 402 pertinent to the account of the service provider thus identified.

The bank center apparatus 30 is operated to create a telephone fee charging report 1300, and to transmit the telephone fee charging report 1300 to the service provider center apparatus 10 by means of the communication unit 31 (step 1422). The telephone fee charging report 1300 comprises the settlement institute identification information 1101 for specifying the bank center apparatus 30, the report identification information 1102 for indicating that the report information is the telephone fee charging report 1300, and the subsequent information 1103 including the account identification information 1301 for indicating account information identified by the account identification information 1001 of the telephone bill 1000, and the amount of money paid 1302 for indicating the amount of money paid, which is the amount of money charged indicated by the amount of money charged 1002 of the telephone bill 1000.

Upon receiving the telephone fee charging report 1300 from the bank center apparatus 30, the service provider center apparatus 10 is operated to notify the service user terminal apparatus 20 of the amount of money collected, i.e., "OO yen is collected", by means of the user communication unit 12 (step 1423).

According to the present invention, the present embodiment of the system for providing a service via a communication line for a communication unit is operative to provide a service via a communication line for a communication unit of the service user terminal apparatus 20 accompanied by an instant settlement process, wherein the service user has a settlement account at a settlement institute, the service is provided by a service provider, the settlement institute has a computer, and the computer of the settlement institute is operative to settle a fee in respect of the service with the settlement account of the service user. Upon receiving a request for checking an available balance on the settlement account of the service user from the service provider center apparatus 10, the bank center apparatus 30 is operative to transmit a report indicative of the balance on the settlement account of the service user to the service provider center apparatus 10, and the service provider center apparatus 10 is operative to judge whether or not the balance on the settlement account of the service user is greater than a predetermined communication connection fee, and to determine whether or not the service is permitted in accordance with a result of the judgment. If it is judged that the balance on the settlement account of the service user is greater than the communication connection fee, the service starts to be provided. Furthermore, the service provider center apparatus 10 is operative to request the bank center apparatus 30 to charge the communication connection fee to the settlement account of the service user after the service starts to be provided if it is judged that the balance on the settlement account of the service user is greater than the communication connection fee.

From the foregoing description, it is to be understood that the present embodiment of the system according to the present invention, in which the bank center apparatus 30 is operative to transmit a report indicative of the balance on the settlement account of the service user to the service provider center apparatus 10 upon receiving a request for checking an available balance on the settlement account of the service user from the service provider center apparatus 10, the service provider center apparatus 10 is operative to judge whether or not the balance on the settlement account of the service user is greater than a predetermined communication connection fee, and to determine whether or not the service is permitted in accordance with a result of the judgment, and the service provider center apparatus 10 is operative to request the bank center apparatus 30 to charge the communication connection fee to the settlement account of the service user after the service starts to be provided if it is judged that the balance on the settlement account of the service user is greater than the communication connection fee, can promptly provide a service and eliminate a risk of failing to collect a service fee in respect of the service from the service user while reducing a time required for communication between the service provider center apparatus 10 and the bank center apparatus 30.

Furthermore, the present embodiment of the system, in which the service provider center apparatus 10 is operative to request the bank center apparatus 30 to charge the communication connection fee to the settlement account of the service user after the service starts to be provided if it is judged that the balance on the settlement account of the service user is greater than the communication connection fee, and the bank center apparatus 30 is operative to charge the fee to the settlement account of the service user, does not need to confirm whether the fee is collected or not, thereby enabling to promptly provide a service and eliminate a risk of failing to collect a service fee in respect of the service from the service user.

Furthermore, the present embodiment of the system, in which the bank center apparatus 30 is operative to detect a change in the balance on the settlement account of the service user, and to transmit a report indicative of a current balance on the settlement account of the service user to the service provider center apparatus 10 if any change is detected, makes it possible for the service provider center apparatus 10 to determine whether or not the service is to be continued in accordance with a result of comparing the current balance on the settlement account of the service user with a communication connection fee to be charged. The present embodiment of the system thus constructed can confirm a change in the balance on the settlement account of the service user while providing a service, thereby eliminating a risk of failing to collect a service fee in respect of the service from the service user.

In the present embodiment of the system according to the present invention, the bank center apparatus 30 may restrict withdrawals from the settlement account of the service user except for the payment of the fee in respect of the service during a period starting from a start time when the service starts to be provided until the service is terminated and the fee in respect of the service so far provided is settled. The present embodiment of the system thus constructed can restrict withdrawals from the settlement account of the service user except for the payment of the fee until the fee in respect of the service so far provided is settled, thereby eliminating a risk of failing to collect a service fee in respect of the service from the service user.

In the present embodiment of the system according to the present invention, the bank center apparatus 30 may transmit a balance change request to the service provider center apparatus 10 if the balance change detecting unit 35 detects any input or request which is to result in a withdrawal from the settlement account of the service user after the service starts to be provided, and the service provider center apparatus 10 may calculate a changed balance on the settlement account of the service user to be caused by the withdrawal, judge whether or not the changed balance on the settlement account of the service user is greater than the communication connection fee to be charged, and respond to the balance change request (for example, permit, refuse, and the like) and determine whether the service is to be continued or terminated in accordance with a result of the judgment. The present embodiment of the system, in which withdrawals from the settlement account of the service user are substantially restricted except for the payment of the fee in respect of the service until the service is terminated and the fee in respect of the service so far provided is settled, can eliminate a risk of failing to collect a service fee in respect of the service from the service user. It is needless to mention that the withdrawals from the settlement account of the service user may be permitted for some requests or purposes in addition to the payment of the fee in respect of the service in the present embodiment of the system.

According to the present invention, if it is judged that the changed balance on the settlement account of the service user is less than the communication connection fee to be charged, the service provider center apparatus 10 may charge the bank center apparatus 30 for the communication connection fee to be charged before the withdrawal resulting from the input is made from the settlement account of the service user, and the bank center apparatus 30 may charge the communication connection fee to be charged to the settlement account of the service user. The present embodiment of the system thus constructed ensures to collect the fee before the balance on the settlement account of the service user becomes insufficient.

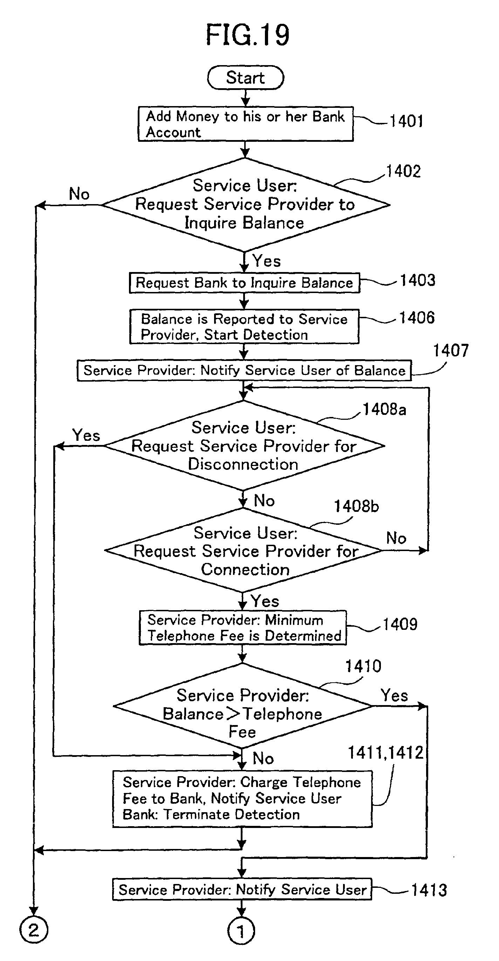

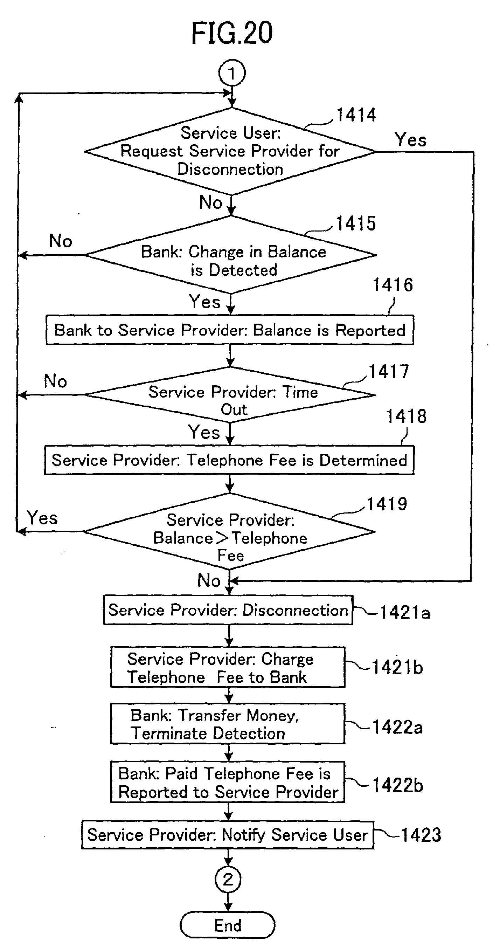

While it has been described in the above that the bank center apparatus 30 is operated to judge whether or not the settlement account of the service user is in use, upon receiving the balance request transmitted from the service provider center apparatus 10, and to refuse the request when it is judged that the settlement account of the service user is in use, the bank center apparatus 30 may perform other processes as shown in FIG. 19 and FIG. 20, which will be described hereinlater.

Steps 1408a and 1408b shown in FIG. 19 correspond to step 1408 shown in FIG. FIG. 17, steps 1421a and 1421b shown in FIG. 20 correspond to step 1421 shown in FIG. 18, and steps 1422a and 1422b shown in FIG. 20 correspond to step 1422 shown in FIG. 18. The steps other than those described above are the same as those described in the second embodiment, and will thus be omitted in description.

While it has been described in the aforesaid embodiments that the computers on the sides of the service provider and the settlement institutes are constituted by the control units 11 and 39 of the respective center apparatuses 10 and 30, the present invention is not limited to the aforesaid embodiments, the present invention may be applicable to a program product for programming a system used to perform an instant settlement process via a communication line.

Furthermore, the program product for programming the computers on the sides of the service provider and the settlement institutes are not limited to a control program product for programming the control units 11 and 39 of the respective center apparatuses 10 and 30, the program product may be implemented in accordance with a system configuration.

### Industrial Applicability

According to the present invention, a computer on the side of a service provider can determine whether or not a service is permitted in accordance with a report indicating whether or not a settlement institute charged a communication connection fee to a settlement account of a service user, thereby eliminating a risk of failing to collect the service fee in respect of the service from the service user. As a result of this, a service providing system according to the present invention, which provides a service via a communication line, can eliminate the need of the conventional insurance fee, which has been paid for the insurance to protect the service providers against the risks, thereby reducing the service fee in respect of the service.

## Claims

1. A service providing method of providing a service via a communication line for a communication unit on the side of a user accompanied by a settlement, said user having a settlement account at a settlement institute, said service being provided by a service provider, said settlement institute and said service provider respectively having computers, said computer of said settlement institute being operative to settle a fee in respect of said service with said settlement account, said service providing method comprising the steps of:
a1) requesting said computer of said settlement institute to charge a communication connection fee to said settlement account of said user, by said computer of said service provider;
b1) judging whether or not it is possible to charge a predetermined amount of said communication connection fee to said settlement account of said user, charging a minimum amount of said communication connection fee to said settlement account of said user as a charging process if it is judged that it is possible, and transmitting a report indicative of a result of said charging process to said computer of said service provider, by said computer of said settlement institute; and
c1) determining whether or not said service is permitted in accordance with said report indicative of said result of said charging process, by said computer of said service provider.

2. A service providing method of providing a service via a communication line for a communication unit on the side of a user accompanied by a settlement, said user having a settlement account at a settlement institute, said service being provided by a service provider, said settlement institute and said service provider respectively having computers, said computer of said settlement institute being operative to settle a fee in respect of said service with said settlement account, said service providing method comprising the steps of:
a2) charging a predetermined initial amount of fee to said settlement account of said user before said service is provided for said communication unit on the side of a user;
b2) requesting said computer of said settlement institute to charge an additional amount of fee in respect of a service to be continued to said settlement account of said user if an amount of fee required for an amount of service accumulatively provided is greater than an amount of fee already paid, by said computer of said service provider;
c2) judging whether or not it is possible to charge said additional amount of fee to said settlement account of said user, charging said additional amount of fee to said settlement account of said user as a charging process if it is judged that it is possible, and transmitting a report indicative of a result of said charging process to said computer of said service provider, by said computer of said settlement institute; and
d2) determining whether or not said service is to be continued in accordance with said report indicative of said result of said charging process, by said computer of said service provider.

3. A service providing method of providing a service via a communication line for a communication unit on the side of a user accompanied by a settlement, said user having a settlement account at a settlement institute, said service being provided by a service provider, said settlement institute and said service provider respectively having computers, said computer of said settlement institute being operative to settle a fee in respect of said service with said settlement account, said service providing method comprising the steps of:
a3) requesting said computer of said settlement institute to check an available balance on said settlement account of said user, by said computer of said service provider;
b3) transmitting a report indicative of said balance on said settlement account of said user to said computer of said service provider, by said computer of said settlement institute; and
c3) judging whether or not said balance on said settlement account of said user is greater than a predetermined communication connection fee, determining whether or not said service is permitted in accordance with a result of said judgment, and requesting said computer of said settlement institute to charge said communication connection fee to said settlement account of said user after said service starts to be provided if it is judged that said balance on said settlement account of said user is greater than said communication connection fee, by said computer of said service provider.

4. A service providing method of providing a service via a communication line accompanied by a settlement as set forth in claim 3, further comprising the steps of:
d) charging said computer of said settlement institute for said communication connection fee after said service starts to be provided, by said computer of said service provider; and
e) charging said communication connection fee charged by said computer of said service provider to said settlement account of said user, by said computer of said settlement institute.

5. A service providing method of providing a service via a communication line accompanied by a settlement as set forth in claim 3 or claim 4, further comprising the steps of:
f) detecting a change in said balance on said settlement account of said user, and transmitting a report indicative of a current balance on said settlement account of said user if any change is detected, by said computer of said settlement institute; and
g) comparing said current balance on said settlement account of said user with a communication connection fee to be charged, and determining whether or not said service is to be continued in accordance with a result of said comparison, by said computer of said service provider.

6. A service providing method of providing a service via a communication line accompanied by a settlement as set forth in claim 3 or claim 5, further comprising the step of:
h) restricting withdrawals from said settlement account of said user except for the payment of said fee in respect of said service during a period starting from a start time when said service starts to be provided until said service is terminated and said fee in respect of said service so far provided is settled, by said computer of said settlement institute.

7. A service providing method of providing a service via a communication line accompanied by a settlement as set forth in claim 3 or claim 5, further comprising the steps of:
i) transmitting a balance change request to said computer of service provider if any input which is to result in a withdrawal from said settlement account of said user is detected after said service starts to be provided, by said computer of said settlement institute; and
j) calculating a changed balance on said settlement account of said user to be caused by said withdrawal, judging whether or not said changed balance on said settlement account of said user is greater than said communication connection fee to be charged, and responding to said balance change request and determining whether said service is to be continued or terminated in accordance with a result of said judgment, by said computer of said service provider.

8. A service providing method of providing a service via a communication line accompanied by a settlement as set forth in claim 7, further comprising the steps of:
k) charging said computer of said settlement institute for said communication connection fee to be charged before said withdrawal resulting from said input is made from said settlement account of said user if it is judged that said changed balance on said settlement account of said user is not greater than said communication connection fee to be charged in said step (j), by said computer of said service provider; and
l) charging said communication connection fee to be charged to said settlement account of said user, by said computer of said settlement institute.

9. A service providing method of providing a service via a communication line accompanied by a settlement as set forth in claim 2, in which
said amount of service is calculated on the basis of a utilization period elapsed from a start time when said service starts to be provided, and an amount of communication packets already provided.

10. A service providing system for providing a service via a communication line for a communication unit on the side of a user accompanied by a settlement, said user having a settlement account at a settlement institute, said service being provided by a service provider, said settlement institute having a computer, said computer of said settlement institute being operative to settle a fee in respect of said service with said settlement account, said service provider comprising:
settlement request means for requesting said computer of said settlement institute to check an available balance on said settlement account of said user, and charge a predetermined communication connection fee to said settlement account of said user as a settlement process;
report request means for requesting said computer of said settlement institute to transmit a report with respect to said settlement process; and
determining means for determining whether providing said service is permitted or not on the basis of said report in response to a connection request from said communication unit.

11. A service providing system for providing a service via a communication line accompanied by a settlement as set forth in claim 10, in which
said settlement request means is operative to request said computer of said settlement institute to check an available balance on said settlement account of said user whenever a predetermined amount of service is provided for a predetermined minimum amount of fee.

12. A service providing system for providing a service via a communication line accompanied by a settlement as set forth in claim 10, in which
said settlement institute comprises: balance judging means for judging an available balance on said settlement account, wherein
said balance judging means is operative to transmit a report indicative of a result of said judgment on said balance on said settlement account to said determining means of said service provider when said settlement request means transmits a communication connection fee bill including account identification information indicative of an account number of said settlement account of said user, and an amount of money to be paid for said communication connection fee.

13. A service providing system for providing a service via a communication line accompanied by a settlement as set forth in claim 10, in which
said settlement institute comprises:
identification information storage means for storing settlement institute identification information used to identify said settlement institute and account identification information indicative of an account number of said settlement account of said user; and
report making means for making a report on said settlement process including an amount of money paid, wherein
said report making means is operative to make said report on said settlement process indicating said amount of money paid being fulfilled when it is judged that said balance on said settlement account is greater than an amount of money to be paid, and said amount of money to be paid is charged to said settlement account of said user and transferred to an account of said service provider,
said report making means is operative to make said report on said settlement process indicating said amount of money paid being zero when it is judged that said balance on said settlement account is less than an amount of money to be paid, and said amount of money to be paid is not transferred to said account of said service provider, and,
said determining means of said service provider is operative to judge whether providing said service is permitted or not depending on whether said amount of money paid indicated in said report is fulfilled or zero.

14. A service providing system for providing a service via a communication line accompanied by a settlement as set forth in claim 10, in which
said service provider further comprises: balance check request means for requesting said settlement institute to check an available balance on said settlement account, wherein
said determining means of said service provider is operative to judge whether providing said service is permitted or not on the basis of said balance on said settlement account.

15. A service providing computer program product comprising a computer usable storage medium having computer readable program code embodied therein for providing a service via a communication line accompanied by a settlement, said user having a settlement account at a settlement institute, said service being provided by a service provider, said settlement institute and said service provider respectively having computers, said computer of said settlement institute being operative to settle a fee in respect of said service with said settlement account, wherein said computer readable program code is executable to perform a set of functions implementing:
settlement request means for requesting said computer of said settlement institute to check an available balance on said settlement account of said user, and charge a predetermined communication connection fee to said settlement account of said user as a settlement process;
report request means for requesting said computer of said settlement institute to transmit a report with respect to said settlement process; and
determining means for determining whether providing said service is permitted or not on the basis of said report in response to a connection request from said communication unit.
